(19) Europäisches Patentamt
European Patent Office
Office européen des brevets

(11) EP 0 468 161 B1

(12) EUROPÄISCHE PATENTSCHRIFT

(45) Veröffentlichungstag und Bekanntmachung des Hinweises auf die Patenterteilung:
**27.03.1996 Patentblatt 1996/13**

(51) Int. Cl.[6]: **C07F 7/00**, C09D 11/14

(21) Anmeldenummer: **91108625.4**

(22) Anmeldetag: **28.05.1991**

# (54) Verfahren zur Herstellung von Titanchelaten

Process for producing titanium chelates

Procédé de préparation de chélates de titane

(84) Benannte Vertragsstaaten:
**AT BE DE ES FR GB NL SE**

(30) Priorität: **27.07.1990 DE 4023851**

(43) Veröffentlichungstag der Anmeldung:
**29.01.1992 Patentblatt 1992/05**

(73) Patentinhaber: **HÜLS AKTIENGESELLSCHAFT**
**D-45764 Marl (DE)**

(72) Erfinder:
- **Horn, Michael, Dr.**
**W-7888 Rheinfelden (DE)**
- **Kötzsch, Hans-Joachim**
**W-7888 Rheinfelden (DE)**

(56) Entgegenhaltungen:
**EP-A- 0 109 014** **EP-A- 0 310 986**
**US-A- 4 521 461** **US-A- 4 558 076**
- **JOURNAL OF THE AMERICAN CHEMICAL SOCIETY, Band 105, Nr. 8, 20. April 1983, American Chemical Society; R.C. FAY et al., Seiten 2118-2127**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 468 161 B1

Printed by Rank Xerox (UK) Business Services
2.9.16/3.4

## Beschreibung

Die Herstellung von Titanchelaten der Formel $(RO)_2TiX_2$, in denen X der Acetylacetonat-Rest und R ein $C_{2-4}$-Alkylrest, sowohl verzweigt als auch unverzweigt, ist, erfolgt im allgemeinen durch Umsetzung von Titanorthoestern der Formel $Ti(OR)_4$ mit zwei Equivalenten des Chelatbildners Acetylaceton unter Abspaltung zweier Equivalente des Alkohols ROH.

Zur Anwendung dieser Titanchelate beläßt man diese gewöhnlich in der entstandenen Reaktionslösung. Der in der Reaktion entstandene Alkohol wird also nicht abgetrennt. Nur so wurde bei den bisher verwendeten Stoffen eine leidliche Kältestabilität erreicht.

Bei der industriellen Anwendung dieser Acetylacetonat-Lösungen, wo die durch den Alkoholgehalt bedingten sehr niedrigen Flammpunkte in Kauf genommen werden müssen, werden oft erheblich schwankende und deshalb nicht befriedigende Wirkungen erzielt. Überdies gelangt der Reaktionsalkohol in die Abluft und/oder das Abwasser und muß durch aufwendige Maßnahmen hieraus wieder entfernt werden.

Nach dem destillativen Abtrennen der Reaktionsalkohole verbleiben viskose Flüssigkeiten, deren Stockpunkte jedoch oberhalb von -18 °C liegen oder die sogar bei Raumtemperatur spontan oder innerhalb kurzer Zeit kristallisieren und dadurch unbrauchbar werden.

Die Aufgabe ist, auch im Sinne einer reduzierten Umweltbelastung, die Entwicklung eines Verfahrens zur Herstellung von leicht und wenig gefährlich handhabbaren Produkten mit zuverlässig guter Wirkung besonders bei der Behandlung von Oberflächen. Eine weitere Aufgabe ist die Verminderung des Gehalts an Lösungsmitteln.

Aus der US-A-4 558 076 sind Beschichtungszusammensetzungen bekannt, welche 0,05 bis 2 Gew.-% eines Titan-Alkoxid-Komplexes mit Chelatbildnern enthalten können. Das dabei entstehende Produkt hat jedoch keine einheitliche Zusammensetzung.

Gemäß der US-A-4 521 461 werden Siloxan-Polyester-Zusammensetzungen für Beschichtungen eingesetzt. Das Verfahren zur Herstellung der beispielsweise als Komponenten eingesetzten Titanchelate ist in dieser Schrift nicht offenbart.

Gegenstand der Erfindung ist ein Verfahren zur Herstellung von Titanchelaten der allgemeinen Formel I

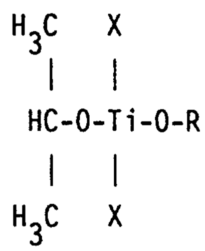

(I),

in welcher gilt:

X =

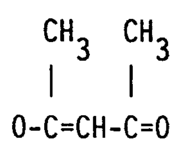

R = wahlweise Ethyl, n-Propyl, n-Butyl, i-Butyl oder t-Butyl, oder deren Gemischen.

Die bisher angewandten Verfahren zur Herstellung von Titanacetylacetonaten mit unterschiedlichen Alkoxyresten am Zentralatom, wie z. B. Mischen der Titanorthoester $(i\text{-Propyl-O})_4Ti$ und $(RO)_4Ti$, Umsetzung dieser Mischung mit dem Chelatbildner Acetylaceton und Abdestillieren der Reaktionsalkohole oder Mischen eines der Ausgangschelate $(R'O)_2TiX_2$ mit dem Titanorthoester $(R''O)_4Ti$, R' = R oder i-Propyl, R'' = R oder i-Propyl, R' ≠ R'', Umsetzung mit dem Chelatbildner und Abdestillieren der Reaktionsalkohole, führen nicht zu einheitlichen Endprodukten mit der durch das Verhältnis der eingesetzten Titanverbindungen vorbestimmten Stöchiometrie. Diese Verfahren führen lediglich zu uneinheitlichen Lösungen gemischter Titanchelate mit sehr stark streuender Zusammensetzung und den daraus resultierenden nachteiligen Eigenschaften.

Die für das erfindungsgemäße Verfahren als Ausgangsprodukte in Frage kommenden Titanchelate $(R'O)_2TiX_2$ werden in einer vorgelagerten Reaktion in an sich bekannter Weise durch Mischen der jeweiligen Titanorthoester $Ti(OR')_4$ mit dem Chelatbildner Acetylaceton und Abdestillieren des Reaktionsalkohols R'OH getrennt hergestellt. Erfindungsgemäß werden die Komponenten anschließend bei Temperaturen zwischen 20 °C und 100 °C, vorzugsweise jedoch 1 °C bis 30 °C oberhalb des Schmelzpunktes der höherschmelzenden Komponente, miteinander zur Reaktion gebracht.

Spektroskopische und chromatographische Analysen zeigen eindeutig, daß in den erhaltenen Reaktionsprodukten die Ausgangschelate als solche nicht mehr vorliegen und die erfindungsgemäßen Verbindungen entstanden sind:

$$\text{Diisopropoxy-}TiX_2 + (RO)_2TiX_2 \text{ ----> } 2\ (\text{i-Propoxy})(RO)TiX_2$$

Soll das Endprodukt bezüglich der enthaltenen Alkylgruppen R und i-Propyl eine von dem Verhältnis 1 : 1 abweichende Zusammensetzung aufweisen, dann kann schon bei der oben beschriebenen Reaktion der entsprechende Überschuß einer der Komponenten eingesetzt werden. Auf diese Weise erhält man die Mischungen des Titanchelats (i-Propyl-O)(RO)$TiX_2$ mit überschüssigem Titanchelat $(R'O)_2TiX_2$ gemäß Anspruch 2 ebenso wie durch Mischen des gemischten Titanchelats (i-Propyl-O)(RO)$TiX_2$ mit weiterem Ausgangschelat $(R'O)_2TiX_2$.

Einzig durch die erfindungsgemäße Verfahrensweise ist sichergestellt, daß das Reaktionsprodukt immer die vorgewählte stöchiometrische Zusammensetzung besitzt.

Weiterhin ist durch die erfindungsgemäße Verfahrensweise sichergestellt, daß die Reaktionsalkohole R'OH getrennt und somit nicht verunreinigt zurückerhalten werden, wieder in die Synthese der Basistitanate $Ti(OR')_4$ eingebracht werden können und nicht in umweltbelastender Weise verlorengehen.

## Beispiel 1

Zu 284 g Tetraisopropyltitanat werden unter Kühlung 200 g Acetylaceton zugetropft. Nach halbstündigem Nachrühren destilliert man das freigesetzte Isopropanol (120 g) vollständig ab. Für den Rückstand Diisopropoxytitan-bis-(acetylacetonat) wird ein Stockpunkt von -18 °C gemessen. In einem zweiten Reaktionsgefäß werden in gleicher Weise 340 g Tetra-n-butyltitanat mit 200 g Acetylaceton umgesetzt und anschließend 148 g n-Butanol abdestilliert. Das Reaktionsprodukt Di-n-butoxytitan-bis(acetylacetonat) bildet, wenn es nicht umgehend weiterverarbeitet wird, bei Raumtemperatur Kristalle von mehreren Zentimetern Kantenlänge.

Zum Rückstand der letzten Destillation wird der Rückstand der ersten Destillation zugemischt und noch 30 Minuten bei Raumtemperatur nachgerührt. Das Reaktionsprodukt Isopropoxy-n-butoxytitan-bis(acetylacetonat) weist einen Stockpunkt von -42 °C auf.

## Beispiel 2

Lösungsmittelfreies Diisopropoxytitan-bis(acetylacetonat) wird aus 284 g Tetraisopropyltitanat und 200 g Acetylaceton hergestellt wie in Beispiel 1 beschrieben.

Das zweite Reaktionsgefäß wird mit 228 g Tetraethyltitanat beschickt. Dazu tropft man unter Kühlung 200 g Acetylaceton und destilliert dann 92 g Ethanol ab. Das zurückbleibende Diethoxytitan-bis(acetylacetonat) kristalliert, wenn man die Sumpftemperatur im Destillationskolben gegen Ende der Destillation auf unter 35 °C sinken läßt, und schmilzt wieder bei 44 bis 50 °C.

Bei 60 °C wird zum Rückstand der zweiten Destillation der Rückstand der ersten Destillation gegeben und die Reaktionsmischung noch 30 Minuten bei 60 °C gehalten. Für das quantitativ anfallende Reaktionsprodukt Ethoxyisopropoxytitan-bis(acetylacetonat) wird ein Stockpunkt von -33 °C gemessen.

Das folgende Beispiel 3 demonstriert die haftfähigkeitserhöhende Wirkung der nach dem erfindungsgemäßen Verfahren hergestellten Stoffe als Additive in Nitrocelluloselacken:

## Beispiel 3

Nitrocelluloseweißlack, der 25 Prozent Nitrocellulose enthält, wird mit 1 Prozent Isopropoxy-n-butoxytitan-bis(acetylacetonat) gemischt.

Auf einer entfetteten Polypropylenfolie wird nun auf einer Hälfte der unbehandelte Lack und auf der anderen Hälfte der mit dem erfindungsgemäßen Titanchelat versetzte Lack aufgerakelt. Die so behandelte Folie wird an der Luft 5 Minuten getrocknet.

Anschließend klebt man in horizontaler Richtung zwei Klebestreifen auf und reißt sie, jeweils von entgegengesetzten Seiten beginnend, mit einem Ruck ab.

Der Vergleich der Folienhälften zeigt, daß der unbehandelte Lack zu mehr als 95 Prozent von der Folie entfernt wurde, der erfindungsgemäß behandelte Lack dagegen nur zu etwa 50 Prozent.

Vergleichsbeispiel:

Das folgende Vergleichsbeispiel ist nicht Bestandteil der vorliegenden Erfindung:
284 g Tetraisopropyltitanat und 340 g Tetra-n-butylisopropyltitanat werden gemischt. Hierzu tropft man 400 g Acetylaceton und destilliert das freigewordene Alkoholgemisch ab. Dieses Gemisch aus Isopropanol und n-Butanol läßt sich nicht rentabel in die Komponenten trennen und muß vernichtet werden.

Die Zusammensetzung des Alkoholgemisches ist zudem abhängig vom Druckverlauf bei der Destillation und deshalb nur schwer reproduzierbar. Dies wirkt sich auch auf die Zusammensetzung des Produkts aus, was an den zwischen 19,5 und 22,5 Prozent schwankenden $TiO_2$-Gehalten bei mehreren Versuchen ersichtlich ist.

## Patentansprüche

1. Verfahren zur Herstellung von Titanchelaten der allgemeinen Formel I

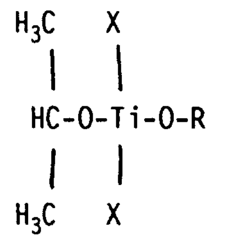

(I),

in welcher gilt:
X=

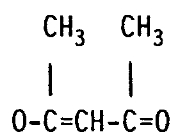

R = wahlweise Ethyl, n-Propyl, n-Butyl, i-Butyl oder t-Butyl,
oder deren Gemischen, **dadurch gekennzeichnet**, daß man die bekannten Titanchelate Diisopropoxy-$TiX_2$ und $(RO)_2TiX_2$, in denen R und X die angegebenen Bedeutungen haben, miteinander im Mol-Verhältnis von 1 : 0,1 bis 1 : 1,9 in flüssiger Phase mischt und diese Mischung für 0 bis 60 Minuten, vorzugsweise für 30 Minuten, bei Temperaturen zwischen 20 °C und 100 °C, vorzugsweise 1 °C bis 30 °C oberhalb des Schmelzpunktes der höherschmelzenden Komponente, thermisch reagieren läßt.

2. Verfahren nach Anspruch 1, **dadurch gekennzeichnet**, daß das Mol-Verhältnis 1 : 1 ist.

## Claims

1. Process for the production of titanium chelates of general formula I

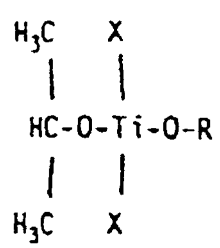

(I),

in which

X =

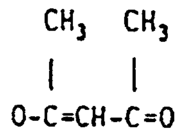

R = alternatively ethyl, n-propyl, n-butyl, i-butyl or t-butyl,
or their mixtures, **characterized in that** the known titanium chelates diisopropoxy-$TiX_2$ and $(RO)_2TiX_2$, in which R and X have the given meanings, are mixed together in the liquid phase in the molar ratio of 1:0.1 to 1:1.9 and this mixture is thermally reacted for 0 to 60 minutes, preferably for 30 minutes, at temperatures between 20°C and 100°C, preferably 1°C to 30°C above the melting point of the higher-melting component.

2. Process according to Claim 1, **characterized in that** the molar ratio is 1:1.

**Revendications**

1. Procédé d'obtention de chelates de titane de formule générale I,

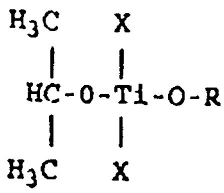

(I),

dans laquelle
X =

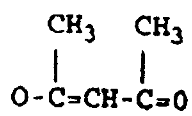

R = facultativement éthyle, n-propyle, n-butyle, i-butyle, ou t-butyle
ou de leurs mélanges, caractérisé en ce que l'on mélange les chelates de titane connus diisopropoxy-$TiX_2$ et $(RO)_2$ $TiX_2$ dans lesquels R et X ont les significations indiquées, l'un avec l'autre dans un rapport molaire de 1:0,1 à 1:1,9, en phase liquide et on fait réagir thermiquement ce mélange pendant 0 à 60 minutes, de préférence pendant 30 minutes, à des températures comprises entre 20 et 100°C, de préférence entre 1 et 30°C au-dessus du point de fusion du composant à point de fusion le plus élevé.

2. Procédé selon la revendication 1, caractérisé en ce que le rapport molaire est 1:1.